Europäisches Patentamt

European Patent Office

Office européen des brevets

(19)

(11) Publication number: **0 011 310**
A1

(12) **EUROPEAN PATENT APPLICATION**

(21) Application number: **79104610.5**

(22) Date of filing: **20.11.79**

(51) Int. Cl.³: **A 23 K 1/20**
**B 01 J 2/00**

(30) Priority: **21.11.78 GB 4540578**

(43) Date of publication of application:
**28.05.80 Bulletin 80/11**

(84) Designated Contracting States:
**AT BE CH DE FR IT LU NL SE**

(71) Applicant: **FEED FLAVOURS (EUROPE) LTD.**
**Fishponds Road**
**Wokingham, Berkshire, RG11 2QL(GB)**

(72) Inventor: **German, Michael Edward**
**"Pineview" 6 Queens Lane**
**Upper Hale Farnham, Surrey(GB)**

(72) Inventor: **Dale, Anthony Richard**
**16 Croft Road**
**Mortimer, Berkshire(GB)**

(74) Representative: **Lesley, Sheila F. et al,**
**FORRESTER & BOEHMERT Widenmayer Strasse 5/IV**
**D-8000 München 22(DE)**

(54) **Binding agent, bodies made by binding of divided material and manufacture of such bodies.**

(57) There is disclosed a method of making up an animal feedstuff in pelleted form, comprising mixing together a plurality of nutritional ingredients in powdered, granular, comminuted or the like form, together with a binding agent comprising plaster of Paris and a urea-formaldehyde resin and in the presence of water and a catalyst for the resin, forming the mixture into pellets or cakes, and allowing the pellets or cakes to set. The use of the binder disclosed allows the composition of the feedstuff to be determined by dietary considerations without regard to the mechanical and adhesive properties of the nutritional components.

EP 0 011 310 A1

Croydon Printing Company Ltd.

THIS INVENTION relates to a binding agent for use in binding powdered, granular, comminuted or similarly divided material together to form larger bodies such as pellets, cakes or the like.

The invention is particularly, but not exclusively applicable to the binding together of the components of animal feed materials in pellets.

Most dry animal feed supplied to farmers as a compound feed containing a number of ingredients is presented in pelleted form. The use of this form has a number of beneficial effects. Thus such use simplifies the calculation and administering of balanced feed rations to animals on the farm, prevents segregation of ingredients during processing, transport storage and handling, and minimises losses of finely ground ingredients during handling operations and while animals are feeding. The use of the pelleted form also prevents rejection by the animal of certain ingredients beneficial to the animal but not particularly palatable.

When pelleting processes were first introduced it was found that the mix of feedstuff ingredients and the conditions used could be arranged so that binders occurring naturally in one or more of the feed components kept the pellets together reasonably well. As the composition of feedstuffs came to be more closely dictated by commercial and nutritional considerations, however, it was found that the mix so dictated could not also be designed so that the pellets would be held together adequately by the binders occurring naturally in the constituents and so additional binding agents were necessary. A variety of materials have been tried as binding agents, the most popular being clay minerals and lignin sulphonate added as a significant percentage (e.g. 1 to 5%) of the feed. One disadvantage of these binding agents is that they must, to be effective, form a significant percentage of the pellet material, whilst contributing little to the feed value of the pellet. Clay minerals can also contribute significantly to wear of the extrusion head of the pelleting machine used to form the pellets. Furthermore the current developments in animal feed technology indicate that pellets with a greater proportion of fat than hitherto are required by the industry for optimum animal nutrition and high energy content feed. It is found that an increase in fat content necessitates a further increase in the proportion of conventional binding agent necessary to prevent undue break-up of the pellets.

The basic technology of the known processes used for making pelleted animal feeds is as follows:

The major ingredients, for example various types of ground cereal, molasses, fat and protein meal, are mixed thoroughly in a mixing vessel together with any binding agents used. The material then passes through a steam chamber where live steam is injected into the mix. The quantity of steam employed and the time spent in the chamber by the material is monitored and controlled carefully in order to bring the mass to the optimum temperature and water content for the next stage. This next stage is the pelleting process where the feed material is forced under considerable pressure through stainless steel dies to form cylindrical or square-section pellets. The temperature of the mix is further increased by the work done during the pelleting operation. The feed is then finally cooled and conveyed to storage to await automatic packaging.

During the process and as a result of the heating, cooling and pressures exerted on the feed, various changes occur to some of the ingredients. Thus fatty materials may be melted and thus caused to disperse better through the mix and then cooled. Proteinaceous materials may be partly cooked or coagulated, and while this may help to bind the pellet constituents together, it may, if overdone, cause loss of feed value. Starchy materials may start to gel or solubilise, again helping to bind the ingredients together. Changes in the flavour of the ingredients will be induced which will clearly influence the palatability of the finished product to the animal for which it is intended. Close control of the conditions must be maintained throughout the process to ensure that the extent of these changes is optimised and a balance must be maintained between the desirable effects of heating, etc. and the deleterious effects caused by overheating.

It is an object of one aspect of the invention to provide an improved binding agent, for use in binding powdered, granular, comminuted or similarly divided material, and which is of particular, but not exclusive, utility for binding together the constituents of pellets of animal feed material.

According to this aspect of the present invention there is provided a binding agent comprising a mixture of an inorganic binder and a resin binder, for example plaster of Paris and a urea-formaldehyde resin respectively.

It is an object of another aspect of the invention to provide an improved method of making up granular, powdered comminuted or otherwise divided material in the form of larger bodies such as pellets or cakes.

According to this aspect of the invention, there is provided a method of making up granular, powdered, comminuted or otherwise divided material in the form of larger bodies, comprising mixing with the material a binding agent according to the first mentioned aspect, forming the mixture into said larger bodies and causing the binding agent in the bodies to set by the action of water and a catalyst to promote setting of the plaster of Paris and polymerisation of the urea formaldehyde resin.

According to another aspect of the invention there is provided a product in the form of a body of granular, powdered, comminuted or the like material bound together by a binder and formed by the above method according to.the invention.

According to yet another aspect of the invention there is provided a method of making up an animal feedstuff in pelleted form, comprising mixing together a plurality of nutritional ingredients in powdered, granular, comminuted or the like form, together with a binding agent comprising plaster of Paris in the hemihydrate form, and in the presence of water, forming the mixture into bodies such as pellets or cakes, and allowing the bodies to set.

The invention, of course, also extends to pelleted or the like animal feedstuffs formed by the last-mentioned method.

Various features of preferred embodiments of the invention will appear from the following description and examples, relating to animal feedstuff.

The binding agent preferred for binding the ingredients of animal feedstuff in pelleted form is a product comprising a mixture of plaster of Paris, i.e. the hemihydrate of calcium sulphate, with an incompletely polymerised urea-formaldehyde resin and a catalyst therefor. Both of these components, i.e. the plaster of Paris and the urea-formaldehyde resin, are hardening agents in their own right but when used together a synergistic effect results. The reaction of plaster of Paris with water is well known, thus the hemihydrate of calcium sulphate, $Ca\,SO_4\,\frac{1}{2}\,H_2O$, when mixed with water evolves heat and solidifies to gypsum, $Ca\,SO_4\,2H_2O$. The type of urea-formaldehyde resin employed is that commonly used in glues for wood or other materials. Thus the polymerisation reaction between urea and formaldehyde is not carried to completion during production of the resin and to the resulting powdered product a dry catalyst is added such that when water is mixed with the product the catalyst is activated and the full polymerisation and cross-linking results in a hard polymer with excellent binding properties. In the production of pelleted animal feed using this binding agent, the overall process used is the same as that referred to above as comprising the basic technology of the known processes.

The reaction of the plaster of Paris with water takes place rapidly during the process and is accelerated by the heating effect as the pellet is extruded. Similarly the activation of the catalyst occurs during extrusion of the pellets and the polymer produced bonds the particles of feed together.

Application trials have indicated that the plaster of Paris/urea-formaldehyde mixture, when used at the rate of 0.1% to 0.3% only, yields pellets with properties similar to those obtained using ten times as much conventional binding agents. In addition when high fat or high molasses formulations were employed to the surface of the pellet was found to be much less sticky with the new binder than when the conventional agents were used. The proportion of plaster of Paris in the binding agent (before reaction and setting) is preferably between 1/3 and 2/3 by weight.

In each of the tables headed "Example A" and "Example B" set out below are given the composition (under column A1 in Example A and under column B1 in Example B) of a respective feed mix incorporating a conventional binder, and the corresponding hardness of the pellets produced and the composition (under column A2 in Example A and under column B2 in Example B) of an equivalent feed mix incorporating the preferred plaster of Paris/urea-formaldehyde binder referred to previously, and the corresponding hardness of the pellets produced. The pellets in each case were produced by the method previously indicated. The effectiveness of the binders in the examples given was compared primarily by the estimation of the average hardness of a sample of the pellets produced, using a Kahl hardness tester. This method is the one commonly used in the industry. In Example A the feed ration is typical of a high energy, high molasses formula and Example B corresponds to a high fat formula.

0011310

EXAMPLE A

|  | A1 % | A2 % |
|---|---|---|
| Barley | 25.0 | 25.0 |
| Wheat | 9.5 | 9.5 |
| Oats | 10.0 | 10.1 |
| Wheat feed | 17.2 | 17.2 |
| Stabilised fat | 1.0 | 1.0 |
| Soya meal 45% | 5.0 | 5.0 |
| Ground nut | 5.0 | 5.0 |
| Distillers maize grains | 15.0 | 15.0 |
| Carboxymethylcellulose binder | 0.3 | - |
| Plaster of Paris/urea/formaldehyde binder | - | 0.2 |
| Minerals and vitamins | 2.0 | 2.0 |
| Molasses | 10.0 | 10.0 |
| Kahl hardness | less than 5 | 7.5 |

EXAMPLE B

|  | B1 % | B2 % |
|---|---|---|
| Barley | 37.5 | 37.5 |
| Wheat | 10.0 | 10.0 |
| Maize | 10.0 | 10.0 |
| Wheat feed | 5.5 | 7.8 |
| Stabilised fat | 5.0 | 5.0 |
| Ground nut | 5.0 | 5.0 |
| Rape seed | 5.0 | 5.0 |
| Distillers maize grains | 10.0 | 10.0 |
| Lignin Sulphonate binder | 2.5 | - |
| Plaster of Paris/urea/formaldehyde binder | - | 0.2 |
| Minerals and vitamins | 2.0 | 2.0 |
| Molasses | 7.5 | 7.5 |
| Kahl hardness | 8 | 9 |

It will be appreciated that whilst, in the examples indicated, a mixture of plaster of Paris and urea/formaldehyde resin is used, in other cases, including, for example cases where the materials to be bound together are other than feedstuffs, plaster of Paris or urea/formaldehyde resin may be used alone as a binding agent or in conjunction with some other substance.

0011310

CLAIMS:

1. A binding agent comprising a mixture of an inorganic binder and a resin binder.

2. A binding agent according to claim 1 wherein the inorganic binder is plaster of Paris and the organic binder is a urea-formaldehyde resin.

3. A method of making up granular, powdered, comminuted or otherwise divided material in the form of larger bodies, comprising mixing with the material a binding agent comprising a mixture of an inorganic binder and a resin binder, forming the mixture into said larger bodies and causing the binding agent in the bodies to set.

4. A method according to claim 3 wherein the inorganic binder used is plaster of Paris, and wherein the organic binder used is a urea formaldehyde resin, and wherein the binding agent is caused to set by the action of water and a catalyst to promote setting of the plaster of Paris and polymerisation of the urea formaldehyde resin.

5. A product in the form of a body of granular, powdered, comminuted or the like material bound together by a binding agent comprising a mixture of an organic and an inorganic binder.

6. A product in the form of a body of granular, powdered, comminuted or the like material bound together by a binder and formed by the method of claim 3.

0011310

7. A method of making up an animal feedstuff in pelleted form, comprising mixing together a plurality of nutritional ingredients in powdered, granular, comminuted or the. like form, together with a binding agent comprising plaster of Paris in the hemihydrate form, and in the presence of water, forming the mixture into bodies such as pellets or cakes, and allowing the bodies to set.

8. Pelleted or the like animal feedstuffs formed by the method of claim 7.

0011310

## EUROPEAN SEARCH REPORT

**Application number**

EP 79 10 4610

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 1 649 123 (C.S. MINER et al.)<br><br>* Claims; page 1, lines 64-71; page 2, lines 5-22, line 52 - line 68 and lines 99-108 * | 7,8 | A 23 K 1/20<br>B 01 J 2/00 |
| | US - A - 2 687 354 (M.F. GRIBBINS)<br><br>* Claims 1-5; column 5, lines 12-20; column 9, line 31 - column 10, line 13 * | 1-3,5<br>6 | |
| | US - A - 3 989 846 (C.K.HELGERSON)<br><br>* Claims; column 3, lines 33-43 and column 3, line 61 - column 4, line 4· * | 1,2,5 | **TECHNICAL FIELDS SEARCHED (Int.Cl. 3)**<br><br>A 23 K 1/20<br>A 23 K 1/175<br>A 23 K 1/22<br>A 23 K 1/16 |
| | US - A - 3 873 733 (W.P.MOORE)<br><br>* Claim 1; column 3, line 30 - column 4, line 3; column 4, lines 19-32 * | 1-6 | |
| | AU - B - 460 390 (I.C.I.)<br><br>* Claim 1; page 4, line 13 - page 5, line 21; example 10 * | 1-6 | **CATEGORY OF CITED DOCUMENTS**<br><br>X: particularly relevant<br>A: technological background<br>O: non-written disclosure<br>P: intermediate document |
| | AU - B - 438 073 (I.C.I.)<br><br>* Claims 1,3,7; page 4, lines 8-10; page 5, lines 1-13; example 6 * | 1-6 | T: theory or principle underlying the invention<br>E: conflicting application<br>D: document cited in the application<br>L: citation for other reasons |
| P | EP - A - 0 000 160 (BASF) | 1-6 | &: member of the same patent family, corresponding document |

The present search report has been drawn up for all claims

| Place of search | Date of completion of the search | Examiner |
|---|---|---|
| The Hague | 15-02-1980 | NUSS |

EPO Form 1503.1  06.78

# EUROPEAN SEARCH REPORT

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | * Claim 1; page 5, lines 5-21; page 6, lines 21-31; examples* -- | | |
| P | GB - A - 2 013 471 (UGINE KUHL-MANN) * Claims; page 1, lines 112-124; page 2, lines 40-48; examples * -- | 1-6 | |
| P | FR - A - 2 390 110 (SOLAIPA) * Claims; examples; page 4, lines 17-35 * -- | 1-8 | TECHNICAL FIELDS SEARCHED (Int. Cl. 3) |
| P | FR - A - 2 412 268 (R.ANDRIEUX-VAQUIE) * Claims * ---- | 1-6 | |

EPO Form 1503.2  06.78